# EUROPEAN PATENT SPECIFICATION

(11) **EP 1 173 055 B1**
(45) Date of publication and mention of the grant of the patent: **21.04.2004**
(21) Application number: 01910223.5
(22) Date of filing: 05.02.2001
(51) Int. Cl.: A01J 5/04, A01J 5/017

(54) **A DEVICE FOR TAKING A MILK SAMPLE**
VORRICHTUNG ZUM ENTNEHMEN EINER MILCHPROBE
DISPOSITIF DESTINE A PRELEVER UN ECHANTILLON DE LAIT

(30) Priority: 28.02.2000 NL 1014508; 21.03.2000 NL 1014710
(43) Date of publication of application: 23.01.2002
(73) Proprietor: Lely Enterprises AG, 6300 ZUG (CH)
(72) Inventor: VAN DER LELY, Alexander, NL-3065 NA Rotterdam (NL); FRANSEN, René, NL-3135 ZD Vlaardingen (NL)
(74) Representative: Corten, Maurice Jean F.M.
(86) International application number: PCT/NL2001/000093
(87) International publication number: WO 2001/064025

(56) References cited:
- EP-A- 0 217 155
- EP-A- 0 533 020
- EP-A- 0 564 023
- GB-A- 2 239 233

## Description

The invention relates to a device for taking a milk sample according to the preamble of claim 1.

Such a device is known, e.g. from EP-A-0564023.

The invention aims at improving such a device.

According to the invention this is achieved in that the device comprises the characterizing features of claim 1. In particular when the switch means are controlled automatically, it is possible to increase the milk sampling capacity of the device without intervention of an operator. This is in particular of importance if the device is applied in an automatic milking implement which is provided with a milking robot.

According to a further inventive feature, the switch means comprise end control means with the aid of which the switch means are activated. In a first embodiment of the invention the end control means comprise a gear control which is provided with a pawl construction and a plate with at least two sectors. According to a further inventive feature, the sectors of the plate actuate a valve. According to again another inventive feature, the valve actuates a shut-off valve with the aid of which a milk sampling supply line to one of the milk sampling units is shut off. It will be obvious that the other supply line is then released. According to again another aspect of the invention, a controlled non-return valve is included between the valve and the shut-off valve. According to again another embodiment of the invention, the end control means comprise an end switch. According to a further inventive feature, the end switch comprises a valve. In a first embodiment of the invention the end switch is controlled mechanically. In a second embodiment of the invention the end switch is preferably actuated by an electronic counter.

The invention further relates to an implement for automatically milking animals, such as cows, provided with a milking robot for automatically connecting teat cups to the teats of an animal to be milked, characterized in that the implement is provided with a device for taking a milk sample as described above.

The invention will now be explained in further detail with reference to the accompanying figures in which:
Figure 1 is a plan view of a milk box with a milking robot and a device according to the invention;
Figure 2 shows a first embodiment of the device according to the invention;
Figure 3 shows a second embodiment of the device according to the invention, and
Figure 4 shows a third embodiment of the device according to the invention.

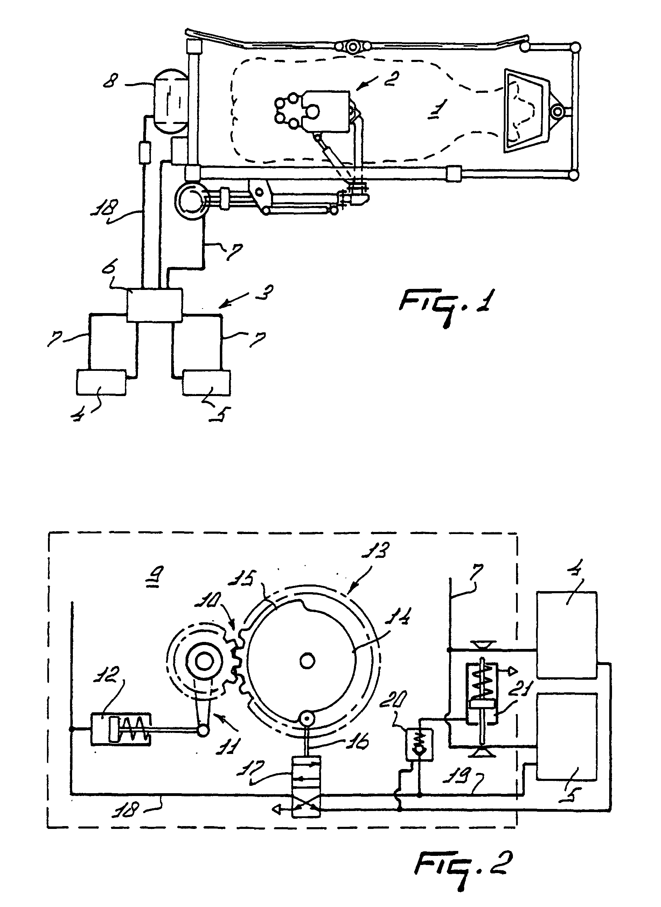

Figure 1 is a plan view of a milk box 1 with a milking robot 2 and a device 3 for taking a milk sample. The device 3 is provided with a first milk sampling unit 4 and a second milk sampling unit 5. The device 3 further comprises switch means 6 with the aid of which the supply of a sample liquid via supply lines 7 to the first milk sampling unit 4 can be switched over automatically to a second milk sampling unit 5 or vice versa. With the aid of the switch means 6 it is also possible to activate or to stop cooling means 8 for cooling the first and second milk sampling unit 4, 5. In the present embodiment the cooling means 8 are constituted by an air unit. However, it will be obvious that the cooling means 8 may also comprise an other type of cooling, such as e.g. a heat exchanger.

Figure 2 shows a diagram of the switch means 6 with the aid of which the supply of a sample liquid to the first milk sampling unit 4 is switched over automatically to the second milk sampling unit 5. For that purpose the switch means 6 comprise end control means 9 which comprise a gear control 10 in the first embodiment. The gear control 10 is provided with a pawl construction 11 which is actuated by a first cylinder 12. In the present embodiment the first cylinder 12 is designed as a single-acting pneumatic cylinder with a drawback spring. The first cylinder 12 is actuated in a pulsating manner. The pulsation frequency is then equal to the frequency with which sampling takes place. So each time when a sample is taken the first cylinder 12 is activated. The pawl construction 11 further comprises a rotatable plate 13 which comprises a first sector 14 and a second sector 15. The plate 13 actuates a valve 17 via a pin 16. In the present embodiment the valve 17 is designed as a two-way valve. Just like the first cylinder 12, the valve 17 is connected, via a line 18, to a cooling system in the form of a compressed air unit 8 which also serves for cooling the two milk sampling units 4, 5. The milk sampling units 4, 5 are cooled via the lines 19. The valve 17 is connected to a shut-off valve 21 via the lines through a non-return valve 20 included therein. In the present embodiment the shut-off valve 21 is designed, just like the first cylinder 12, as a single-acting pneumatic cylinder with a drawback spring. However, it will be obvious that also any other type of shut-off valve with a similar function may be used. Depending on the position of the valve 17, the shut-off valve 21 shuts off the supply line 7 to one of the milk sampling units 4, 5. As shown in Figure 2, the supply of sample liquid via the supply line 7 to the second milk sampling unit 5 is shut off. However, when a new sample is taken the plate 13 will rotate, as a result of which the pin 16 is pressed, whereupon the valve 17 is controlled, so that the shut-off valve 21 is activated, as a result of which the supply of sample liquid to the first milk sampling unit 4 is shut off and the supply to the second milk sampling unit 5 is released. At that moment also the cooling of the first milk sampling unit 4 is switched off and that of the second milk sampling unit 5 is switched on.

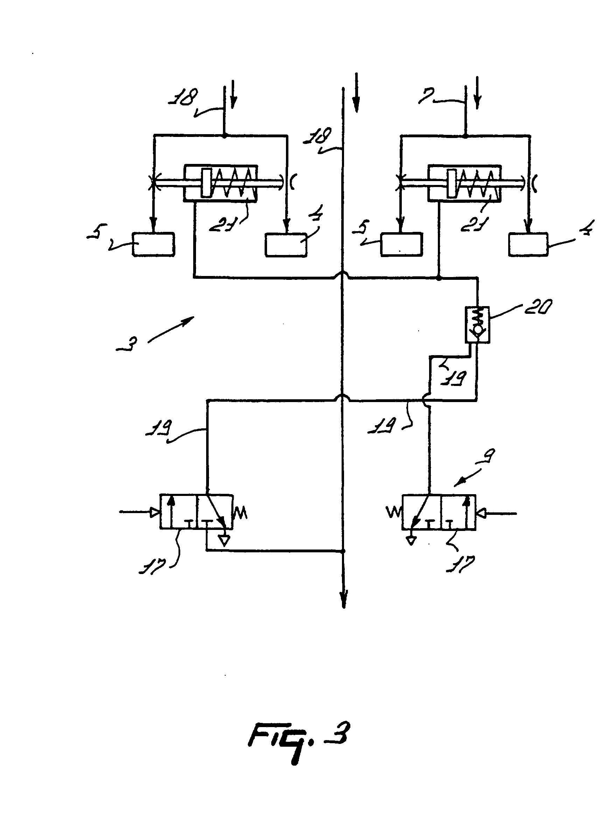

Figure 3 shows a second embodiment of a device 3 according to the invention, in which parts corresponding to those of the embodiment of Figure 2 are indicated by the same reference numerals. The device 3 according to the second embodiment also comprises control means 9 which are designed as two valves 17 in the present embodiment. At the moment when the last sample has been taken by the first milk sampling unit, the left hand valve 17 in Figure 3 is automatically controlled. This may be effected mechanically or electronically. Via the line 18 compressed air then flows to the line 19 through the non-return valve 20 to the shut-off valves 21. The two shut-off valves 21 are controlled at the same time. The left hand shut-off valve 21 ensures that the cooling of the first milk sampling unit 4 is switched off and that of the second milk sampling unit 5 is switched on, while the right hand shut-off valve ensures that the supply line 7 for the sample liquid to the first milk sampling unit 4 is shut off and that to the second milk sampling unit 5 is opened. The non-return valve ensures that the shut-off valves 21 remain in their newly assumed position. When the last sample has been taken by the second milk sampling unit 5, the right hand valve 17 is controlled automatically, as a result of which the line 19, which is in connection with the non-return valve 20, de-aerates the lines to the shut-off valves 21, as a result of which the latter ensure under spring action that the supply lines of both the cooling medium and the sample liquid to the second milk sampling unit 5 are shut and those to the first milk sampling unit 4 are opened.

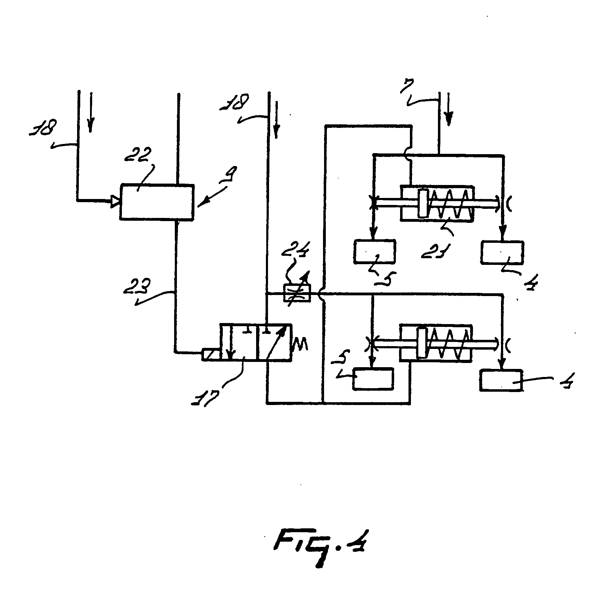

Figure 4 shows a third embodiment of the device according to the invention, in which parts corresponding to those of the first and second embodiment of the invention are indicated by the same reference numerals. The device 3 according to the third embodiment also comprises end control means 9 which comprise e.g. an electronic counter 22 in the present embodiment. However, it will be obvious that this may also be a mechanical counter. With the aid of the electronic counter 22 it is recorded how many samples have been taken by a particular milk sampling unit. This takes place on the basis of the air pulses which are supplied to the electronic counter 22 via the line 18. If a pre-set amount of samples has been taken, the electronic counter 22 supplies a signal to the valve 17 via a line 23. In this manner air can flow via the line 18 through the valve 17, as a result of which the shut-off valves 21 are controlled, in such a manner that the supply of the cooling medium and the sample liquid to the first milk sampling unit 4 is switched over to the second milk sampling unit 5. Due to the fact that a throttle valve 24 is included in the line 18, it is possible not to switch off the cooling of a milk sampling unit completely, but for e.g. 80%. In a preferred embodiment of the invention the throttle valve 24 is adjustable, so that the cooling capacity can be adjusted per milk sampling unit.

## Claims

1. A device (3) for taking a milk sample, provided with a first milk sampling unit (4) and at least one further milk sampling unit (5), said device (3) comprising switch means (6) with the aid of which the supply of a sample liquid to the first milk sampling unit (4) can be switched over automatically or manually to a further milk sampling unit (5) or vice versa, **characterized in that**, said device comprises cooling means (8) for cooling the milk sampling units (4, 5) said cooling means (8) being automatically actuated with the aid of said switch means (6).

2. A device as claimed in claim 1, **characterized in that** the switch means (6) comprise end control means (9) with the aid of which the switch means (6) are activated.

3. A device as claimed in claim 2, **characterized in that** the end control means (9) comprise a gear control (10) which is provided with a pawl construction (11) and a plate (13) with at least two sectors (14, 15).

4. A device as claimed in claim 3, **characterized in that** the sectors (14, 15) of the plate (13) actuate a valve (17).

5. A device as claimed in claim 3 or 4, **characterized in that** the valve (17) actuates a shut-off valve (21) with the aid of which a milk sampling supply line (7) to one of the milk sampling units (4, 5) is shut off.

6. A device as claimed in claim 5, **characterized in that** a controlled non-return valve (20) is included between the valve (17) and the shut-off valve (21).

7. A device as claimed in claim 2, **characterized in that** the end control means (9) comprise an end switch.

8. A device as claimed in claim 7, **characterized in that** the end switch comprises a valve (17).

9. A device as claimed in claim 7 or 8, **characterized in that** the end switch is controlled mechanically.

10. A device as claimed in claim 7 or 8, **characterized in that** the end switch is preferably actuated by an electronic counter (22).

11. A device as claimed in any one of the preceding claims, **characterized in that**, with the aid of the switch means (6), there are automatically actuated further means, such as e.g. registration means for registering the milk samples and/or control means for controlling further functions of the milk sampling units (4, 5).

12. A device as claimed in claim 11, **characterized in that** the control means are controlled pneumatically and/or electrically.

13. An implement for automatically milking animals, such as cows, provided with a milking robot (2) for automatically connecting teat cups to the teats of an animal to be milked, **characterized in that** the implement is provided with a device for taking a milk sample as described in any one of claims 1 to 12.

## Patentansprüche

1. Einrichtung (3) zur Entnahme einer Milchprobe, die mit einer ersten Milchproben-Entnahmeeinheit (4) und mindestens einer weiteren Milchproben-Entnahmeeinheit (5) versehen ist, wobei die Einrichtung (3) eine Schaltvorrichtung (6) umfaßt, mittels der die Zufuhr einer Probenflüssigkeit zu der ersten Milchproben-Entnahmeeinheit (4) automatisch oder manuell auf eine weitere Milchproben-Entnahmeeinheit (5) oder umgekehrt umgeschaltet werden kann,
**dadurch gekennzeichnet, daß** die Einrichtung eine Kühlvorrichtung (8) zum Kühlen der Milchproben-Entnahmeeinheiten (4, 5) umfaßt, wobei die Kühlvorrichtung (8) mittels der Schaltvorrichtung (6) automatisch betätigt wird.

2. Einrichtung nach Anspruch 1,
**dadurch gekennzeichnet, daß** die Schaltvorrichtung (6) eine endseitige Steuervorrichtung (9) umfaßt, mit deren Hilfe die Schaltvorrichtung (6) aktiviert wird.

3. Einrichtung nach Anspruch 2,
**dadurch gekennzeichnet, daß** die endseitige Steuervorrichtung (9) eine Zahnradsteuerung (10) umfaßt, die mit einer Schaltklinken-Konstruktion (11) und einer Platte (13) mit mindestens zwei Sektoren (14, 15) versehen ist.

4. Einrichtung nach Anspruch 3,
**dadurch gekennzeichnet, daß** die Sektoren (14, 15) der Platte (13) ein Ventil (17) betätigen.

5. Einrichtung nach Anspruch 3 oder 4,
**dadurch gekennzeichnet, daß** das Ventil (17) ein Absperrventil (21) betätigt, mittels dessen eine Milchproben-Zuführleitung (7) zu einer der Milchproben-Entnahmeeinheiten (4, 5) abgesperrt wird.

6. Einrichtung nach Anspruch 5,
**dadurch gekennzeichnet, daß** ein gesteuertes Rückschlagventil (20) zwischen dem Ventil (17) und dem Absperrventil (21) angeordnet ist.

7. Einrichtung nach Anspruch 2,
**dadurch gekennzeichnet, daß** die endseitige Steuervorrichtung (9) einen Endschalter umfaßt.

8. Einrichtung nach Anspruch 7,
**dadurch gekennzeichnet, daß** der Endschalter ein Ventil (17) umfaßt.

9. Einrichtung nach Anspruch 7 oder 8,
**dadurch gekennzeichnet, daß** der Endschalter mechanisch gesteuert wird.

10. Einrichtung nach Anspruch 7 oder 8,
**dadurch gekennzeichnet, daß** der Endschalter vorzugsweise von einem elektronischen Zähler (22) betätigt wird.

11. Einrichtung nach einem der vorhergehenden Ansprüche,
**dadurch gekennzeichnet, daß** mittels der Schaltvorrichtung (6) automatisch weitere Vorrichtungen betätigt werden, wie z. B. eine Registriervorrichtung zum Registrieren der Milchproben und/oder eine Steuervorrichtung zum Steuern weiterer Funktionen der Milchproben-Entnahmeeinheiten (4, 5).

12. Einrichtung nach Anspruch 11,
**dadurch gekennzeichnet, daß** die Steuervorrichtung pneumatisch und/oder elektrisch gesteuert wird.

13. Vorrichtung zum automatischen Melken von Tieren, wie z. B. Kühen, die mit einem Melkroboter (2) zum automatischen Anschließen von Zitzenbechern an die Zitzen eines zu melkenden Tieres versehen ist,
**dadurch gekennzeichnet, daß** die Vorrichtung mit einer Einrichtung zur Entnahme einer Milchprobe nach einem der Ansprüche 1 bis 12 versehen ist.

## Revendications

1. Dispositif (3) pour prélever un échantillon de lait, muni d'une première unité d'échantillonnage de lait (4) et au moins d'une unité d'échantillonnage de lait supplémentaire (5), ledit dispositif (3) comprenant des moyens formant commutateur (6) avec l'aide desquels l'alimentation d'un échantillon de liquide à la première unité d'échantillonnage de lait (4) peut être commutée automatiquement ou manuellement à une unité d'échantillonnage de lait supplémentaire (5) ou vice versa, **caractérisé en ce que**, ledit dispositif comprend des moyens de refroidissement (8) pour refroidir les unités d'échantillonnage de lait (4, 5) lesdits moyens de refroidissement (8) étant actionnés automatiquement avec l'aide desdits moyens formant commutateur (6).

2. Dispositif selon la revendication 1, **caractérisé en ce que** les moyens formant commutateur (6) comprennent des moyens de contrôle final (9) avec l'aide desquels les moyens formant commutateur (6) sont activés.

3. Dispositif selon la revendication 2, **caractérisé en ce que** les moyens de contrôle final (9) comprennent une commande d'engrenage (10) qui est munie d'une construction à cliquet (11) et d'une plaque (13) avec au moins deux secteurs (14, 15).

4. Dispositif selon la revendication 3, **caractérisé en ce que** les secteurs (14, 15) de la plaque (13) actionnent une vanne (17).

5. Dispositif selon la revendication 3 ou 4, **caractérisé en ce que** la vanne (17) actionne une vanne dé coupure (21) avec l'aide de laquelle une conduite d'alimentation d'échantillonnage de lait (7) de l'une des unités d'échantillonnage de lait (4, 5) est coupée.

6. Dispositif selon la revendication 5, **caractérisé en ce que** un clapet de non-retour contrôlé (20) est compris entre la vanne (17) et la vanne de coupure (21).

7. Dispositif selon la revendication 2, **caractérisé en ce que** les moyens de contrôle final (9) comprennent un commutateur final.

8. Dispositif selon la revendication 7, **caractérisé en ce que** le commutateur final comprend une vanne (17).

9. Dispositif selon la revendication 7 ou 8, **caractérisé en ce que** le commutateur final est contrôlé mécaniquement.

10. Dispositif selon la revendication 7 ou 8, **caractérisé en ce que** le commutateur final est, de préférence, actionné par un compteur électronique (22).

11. Dispositif selon l'une quelconque des revendications précédentes, **caractérisé en ce que**, avec l'aide des moyens formant commutateur (6), des moyens supplémentaires sont actionnés automatiquement, tels que, par exemple, des moyens d'enregistrement pour enregistrer les échantillons de lait et/ou des moyens de contrôle pour contrôler des fonctions supplémentaires des unités d'échantillonnage de lait (4, 5).

12. Dispositif selon la revendication 11, **caractérisé en ce que** les moyens de contrôle sont contrôlés pneumatiquement et/ou électriquement.

13. Instrument pour traire des animaux automatiquement, tels que des vaches, muni d'un robot e traite (2) pour raccorder automatiquement des gobelets de traite aux trayons d'un animal à traire, **caractérisé en ce que** l'instrument est muni d'un dispositif pour prélever un échantillon de lait comme décrit selon l'une quelconque des revendications 1 à 12.
